# EUROPEAN PATENT SPECIFICATION

(11) **EP 0 573 186 B1**
(45) Date of publication and mention of the grant of the patent: **04.09.1996**
(21) Application number: 93303968.7
(22) Date of filing: 21.05.1993
(51) Int. Cl.: F02C 9/26, F02C 9/46

(54) **Control device for a gas turbine system and control method therefor**
Regeleinrichtung für eine Gasturbinenanlage und Regelverfahren hierfür
Dispositif de commande pour un système de turbine à gaz et méthode de commande pour celui-ci

(30) Priority: 22.05.1992 JP 155733/92
(43) Date of publication of application: 08.12.1993
(73) Proprietor: HITACHI, LTD., Chiyoda-ku, Tokyo 101 (JP)
(72) Inventor: Tani, Yukiyoshi, Hitachiota-shi (JP); Ashita, Makoto, 7-28, Omikacho-6-chome, Hitachi-shi (JP)
(74) Representative: Calderbank, Thomas Roger

(56) References cited:
- US-A- 4 248 040
- US-A- 4 259 835
- US-A- 4 341 071

## Description

The present invention relates to a control device and a control method for a gas turbine system of a gas turbine power generation system at a power plant, and relates more particularly to a control system for performing the operation control of the gas turbine and protection of the gas turbine from an abnormal operation by using a computer program.

As technologies which are relevant to the control system of the present invention, there are following technologies that have been disclosed in the unexamined publications.

A monitoring unit is disclosed in the Japanese Patent Unexamined Publication No. JP-A-1-292599 as a Japanese patent application made by Toshiba Co., Ltd. on May 20, 1988.

A sequence display unit is disclosed in the Japanese Patent Unexamined Publication No. JP-A-58-14208 as a Japanese patent application made by Hitachi, Ltd. on July 17, 1981. In this display unit, a desired position of the logic sequence including AND circuits and OR circuits can be displayed.

A system for controlling the protection function of a turbine by using a computer is disclosed in the Japanese Patent Unexamined Publication No. JP-A-51-93322 as a Japanese patent application made by Hitachi, Ltd. on February 14, 1975.

A control system for an electric power plant is disclosed in the United States Patent Number 4,788,647 granted to McManus et al. on November 29, 1988. The control system has a multi-task processor which executes the task for protecting a system stored in the EEPROM.

An overspeed protection control arrangement for a steam turbine generator control system is disclosed in the United States Patent Number 4,635,209 granted to Hwang et al. on January 6, 1987.

The control of a gas turbine system can be broadly divided into two items. One is the control relating to the normal operation of the gas turbine system. For example, this control includes a starting control, a velocity control or an exhaust temperature control of the turbine.

The other is the control relating to the protection control of various types of devices structuring the gas turbine system. This control includes, for example, an overspeed protection, a protection from a high exhaust temperature, a protection from a vibration and a protection from loss of flame, of the gas turbine respectively. These protection functions are very important and necessary functions for the gas turbine system and, therefore, are called important functions.

For the control relating to the operation, a control logic sequence is predetermined. Operation parameters are measured for the system that structures the gas turbine system and a logical processing is carried out based on the measured values so as to determine a control level of the valve for controlling the fuel flow rate of the fuel to be supplied to the gas turbine.

For the control relating to the protection function, operation parameters of various types of devices that structure the gas turbine system are monitored and the parameters are logically processed, and if the value of a parameter is found to be deviated from a reference value as a result of the logical processing, a protection operation is carried out, that is, a command is issued for stopping the fuel supply to the gas turbine.

According to the conventional control relating to the protection function, the processing of the protection control (control of the important functions) has been executed by a hardware circuit and this has not been carried out by a software program. This is because it has been desired to avoid a possibility of an occurrence of a system trip or a damaging of devices due to a program error since the protection function is an important function in the gas turbine system.

However, along with the increasing demand for the higher reliability of computer technologies in recent years, the use of software has been requested not only for the control operation but also for the operation of the important functions. In this case, the operation of the important functions in the gas turbine control system refers to the operation for preventing the devices from being damaged, and more specifically, this operation means the protection of the gas turbine from overspeed, the protection of the gas turbine from a high exhaust temperature, the protection of the gas turbine from excessive vibration and the protection of the gas turbine from loss of flame.

US-A-4341071 discloses a control system for a gas turbine which, following starting of the turbine, stops the turbine if a predetermined speed is not reached after a predetermined time period, indicating some problem. If the turbine is started successfully, the control system supplies fuel at an optimal rate.

US-A-4259835 discloses a control system for a gas turbine which is capable both of emergency shutdown and control during normal running operation.

When the operation of the important functions has been programmed, it is necessary to store the program in a ROM (read only memory) and fix the program in order to protect the program from being accessed by the user so as to prevent an occurrence of program errors. In the operation according to the program, the program which has been fixed by a certain program language is processed according to a coded procedure. Therefore, the user can not monitor the intermediate process of the operation in the manner as he can monitor the sequence of the hardware. Thus, according to the conventional technique, the user can understand only the result of the processing.

If the user can know the intermediate process of the operation as well as the result of the operation, he or she can also check whether the system is sound at the time of the maintenance inspection and test abnormality of the system to analyze the system by tracing from the cause to the result of the abnormality, to therefore improve the reliability of the system.

The present invention seeks to provide a control unit and a control method for a highly reliable gas turbine system according to a computer program which enables the intermediate process of the operation of the important functions to be displayed on the screen for the user.

According to a first aspect the invention provides a control device for controlling a gas turbine system according to a computer program, having:
means for measuring operation parameters of devices structuring said gas turbine system;
control task storing means for performing an operation of a control level relating to the revolution of said gas turbine system based on values of said measured operation parameters;
protection task storing means for storing a protection task which performs an operation of control levels relating to protection functions of devices structuring said gas turbine system, based on said values of said measured operation parameters;
operation processing means for executing both said control task and said protection task; and
means for generating a control signal for controlling the operation of said gas turbine system according to a result of the execution of said operation processing means;
and wherein:
said protection task is not able to be rewritten from the outside and includes an accessible work area for temporarily storing an intermediate process of said control levels relating to said protection function; and
the control device further comprises;
display means for displaying an operation procedure of said control levels relating to said protection functions in an image made of a combination of fixed symbols; and
means for reading said intermediate process of the operation from said work area of said protection task and adding said intermediate process of the operation to the image of said operation process of said image display means.

According to a second aspect the inventor provides a method for controlling an operation of a gas turbine system according to a computer program, comprising the steps of:
measuring operation parameters of devices structuring said gas turbine system;
effecting within said computer program a control task for carrying out an operation of control levels relating to the operation of said gas turbine, by using values of said operation parameters that have been measured;
effecting within said computer program a protection task for carrying out an operation of control levels relating to protection functions of devices structuring said gas turbine system by using values of said operation parameters that have been measured;
generating a control signal for controlling the operation of said gas turbine system according to a result of the execution of both said tasks;
wherein:
said step of effecting of the protection task is independent of said control task;
and the method further comprises the steps of;
making an image display of an operation procedure of control levels relating to said protection function by a combination of fixed symbols; and
displaying an intermediate process of an operation of said protection task on said image of the operation procedure that is being displayed.

According to the control unit and the control method for the gas turbine system of the present invention, the control task for carrying out the operation of the control level relating to the operation of the gas turbine system and the protection task for carrying out the operation of the control level relating to the protection function of the devices that structure the gas turbine system may be set mutually independent of each other. Further, an accessible work area for temporarily storing the intermediate process of the operation of the control level relating to the protection function may be provided within the protection task. During the execution of the protection task, the intermediate process of the operation can be read out from the work area of the protection task and this can be displayed in the image display unit.
Fig. 1 is a block diagram of the control system for the gas turbine generating system according to the present invention;
Fig. 2 is a flow chart for the control of the gas turbine generating system;
Fig. 3 is a block diagram for showing an embodiment of the gas turbine generation control system according to the present invention;
Fig. 4 is a block diagram for showing another embodiment of the gas turbine generation control system according to the present invention;
Fig. 5 shows a task structure of the control program for the gas turbine generation control system according to the present invention;
Fig. 6 shows a task structure of the protection program for the gas turbine generation control system according to the present invention;
Fig. 7 shows one example of the task protection;
Fig. 8 shows one example of the display screen of the intermediate process of the operation of the task of the protection program; and
Fig. 9 is a flow chart for displaying the intermediate process of the operation.

Embodiments of the present invention will be explained below with reference to the drawings.

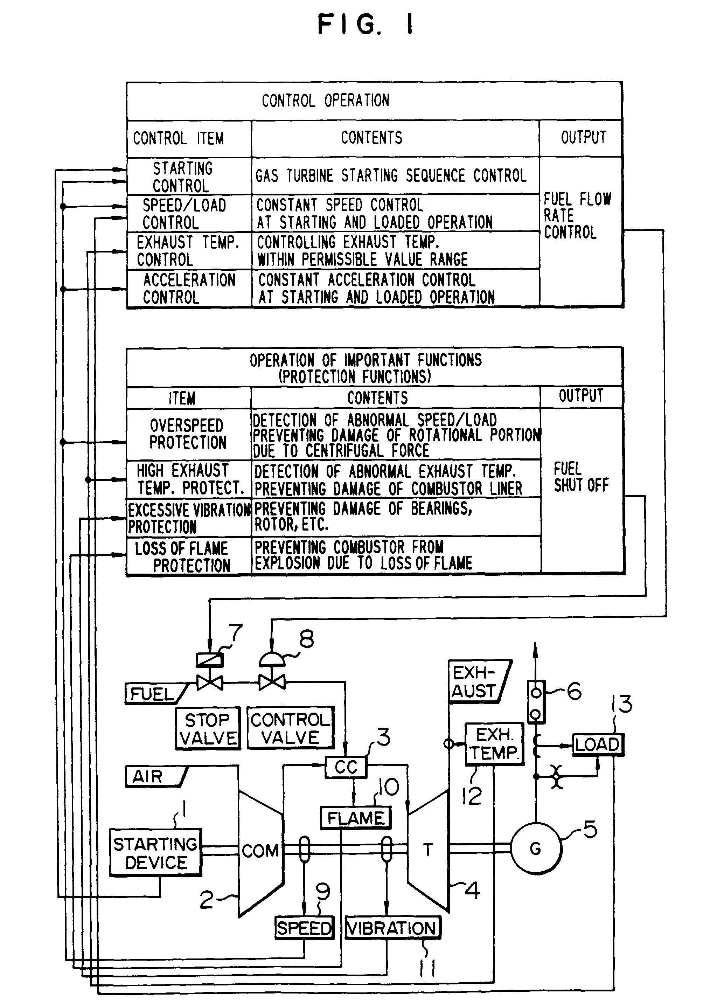

Fig. 1 shows a relationship between the control system of the gas turbine generating system according to the present invention, the control operation and the operation of the important functions.

Referring to Fig. 1, the gas turbine control system includes a gas turbine starting unit 1, a compressor 2 for compressing and increasing pressure of the air taken into it from the atmosphere, a combustor 3 for firing the fuel by mixing it with the compressed air, a turbine 4 for converting the energy of the combusted gas into a rotational energy and exhausting the exhaust gas to the outside, and a generator 5 which is driven by the turbine 4. The electric energy generated by the generator 5 is transmitted via a circuit breaker 6 of the generator. The fuel is flown into the combustor 3 through a fuel shut off valve 7 and a fuel flow rate control valve 8, and power generation is controlled by adjusting the fuel flow rate.

Accordingly, the principal control of the gas turbine in the gas turbine control system is achieved by the control of the fuel flow rate control valve 8 at the operation terminal. By opening or closing the fuel flow rate control valve 8, the flow rate of the fuel supplied to the combustor 3 is controlled and the output of the gas turbine is controlled accordingly.

9 designates a revolution velocity detector, 10 a fire detector, 11 a vibration detector, 12 an exhaust temperature detector and 13 a load detector.

Next, the control operation of the gas turbine operation will be explained.

The control items include "starting control", "speed/load control", "exhaust temperature control" and "acceleration control".

The "starting control" is a starting sequence control of the gas turbine and is carried out by a predetermined logical processing based on the speed increase characteristics stored in advance in the gas turbine starting device 1 and the output of the revolution speed detector 9 of the gas turbine. The starting sequence is controlled based on the speed increase characteristics so that the speed of the gas turbine 5 is increased.

The "speed/load control" is a control of a constant speed following a setting of a load and is carried out by a predetermined logical processing based on the outputs of the revolution speed detector 9 of the gas turbine and the load detector 13 at the starting operation and the loaded operation respectively.

The "exhaust temperature control" is a control of the exhaust temperature within a permissible range and is carried out by a predetermined logical processing based on the output of the exhaust temperature detector 12 for detecting the temperature of the exhaust in order to avoid the thermal stress at the high-temperature portion of the gas turbine.

The "acceleration control" is a control of the acceleration to restrict a sudden increase in the speed at the time when the load is disengaged and is carried out by a predetermined logical processing based on the output of the revolution speed detector 9 of the gas turbine.

The above control processing is carried out to control the operation of the gas turbine by controlling the opening and closing of the fuel flow rate control valve 8 to thereby adjust the fuel flow rate according to the result of the above-described control operations.

The flow rate control characteristics of the fuel flow rate control valve 8, that is the relationship between the input level in the result of the control operation and the fuel flow rate, is different depending on the individual gas turbine systems where the fuel flow rate control valve 8 is installed. This is because the flow rate is different due to the difference of the volume of the piping in each gas turbine system. Further, for even the same gas turbine system, the flow rate control characteristics change due to secular change. Accordingly, in the gas turbine system, a test operation is carried out when the fuel flow rate control valve 8 has been installed and the fuel flow rate control valve 8 and its control system are adjusted to so as to obtain an optimum operating condition. Further, at the periodical inspections, the fuel flow rate control valve 8 and its control system are adjusted so as to correct the secular change.

Since it is necessary to alter the control operation for the control of the fuel flow rate control valve 8 due to both the difference between individual gas turbine systems and due to secular change, it is not generally possible to fix the control operation program.

The operation of the important functions which are the protection functions will be explained next.

Items of the important functions in the gas turbine control system include "protection from an overspeed", "protection from a high exhaust temperature", "protection from excessive vibration" and "protection from loss of flame".

The "protection from an overspeed" is a protection of the rotation portion from damages due to a detected abnormal state of the speed/load control and a centrifugal force and is carried out by a processing based on the output of the revolution speed detector 9 of the gas turbine.

The "protection from a high exhaust temperature" is a protection of the combustor liner and the like from damages due to a detected abnormal state of the control of the exhaust temperature and is carried out by a predetermined logical processing based on the output of the exhaust temperature detector 12.

The "protection from excessive vibration" is a protection of the bearings, rotors, etc. from damages and is carried out by a predetermined logical processing based on the output of the vibration detector 11.

The "protection from loss of flame" is a protection of the combustor 3 from an explosion due to loss of flame.

The above-described protection functions are provided to prevent the gas turbine from being damaged. When any one of the functions has stopped working the fuel shut off valve 7 is fully closed to safely stop the gas turbine.

Unlike the previously-described control functions, in the operation of the important functions, operation values for effecting the protection operation are determined by a gas turbine main body. For example, 110% of the rated value is taken for the acceleration, 580 degree centigrade for the exhaust temperature, 1.51 inch/sec. for the vibration, etc., all of which values are the values for preventing the gas turbine main body from being damaged, and these values require no adjustments at the time of a test operation or at the periodical inspections.

Accordingly, the operation of the important functions has so far been structured generally by hardware so as not to invite errors in adjustment. In the present invention, the operation of the important functions is carried out by software and the software program is fixed so as not to be accessed by the user.

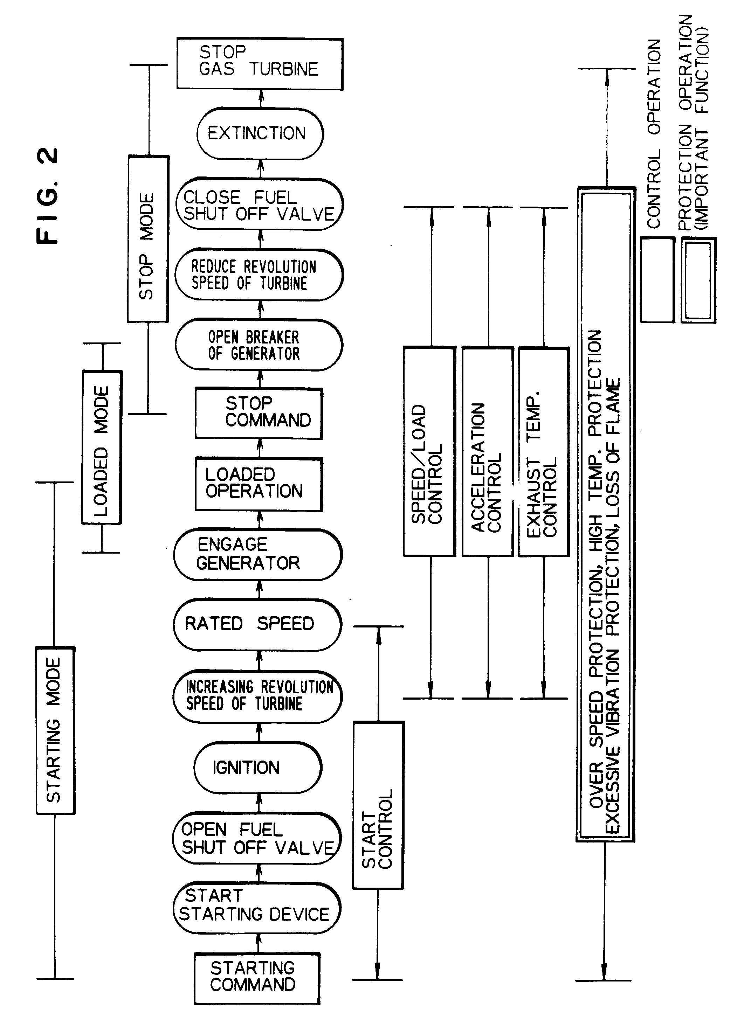

Next, Fig. 2 shows the operation procedures of the staring mode, load mode and stop mode of the gas turbine control system and the relationship between the control operation and the operation of the important functions of the gas turbine.

The gas turbine 4 is started as follows. The starter 1 is started by a starting command and the revolution speed of the gas turbine 4 increases to reach an ignition speed. Then the fuel shut off valve 7 is opened and fuel flows through the valve to start an ignition, thereafter to allow the gas turbine 4 to increase the revolution speed by itself. When the revolution speed of the gas turbine 4 has reached a rated speed, the generator 5 is also operated together to start a loaded operation. The gas turbine 4 is stopped as follows. When a stop command is received, the load is reduced and the circuit breaker 6 is opened. Then the gas turbine is decelerated and the fuel shut off valve 7 is closed when the fire extinction speed is reached. Then the fire is extinguished and the gas turbine 4 is stopped.

The "start control" of the gas turbine is the control operation of the gas turbine from when the starting command is received till when the revolution speed of the gas turbine 4 reaches the rated speed. The "speed/load control", "acceleration control" and "exhaust temperature control" are the control operations which last from when the stop command is received till when the fuel shut off valve 7 is closed.

These four control operations including the "starting control" are adjusting controls for adjusting the opening of the fuel flow rate control valve 8. However, while a plurality of controls are being carried out at a same time, the opening of the fuel flow rate control valve 8 is controlled with the smallest value.

The operations of the important functions such as the "protection from an overspeed", "protection from an exhaust temperature", "protection from excessive vibration" and "protection from loss of flame" are carried out from when the starting command is received till when the gas turbine stops. These operations are carried out independent of the control operation of the gas turbine, always not to damage the gas turbine main body. While the control operations change the contents of the operations in time series, the operations of the important functions are always constant so that these operations can be set in a fixed program.

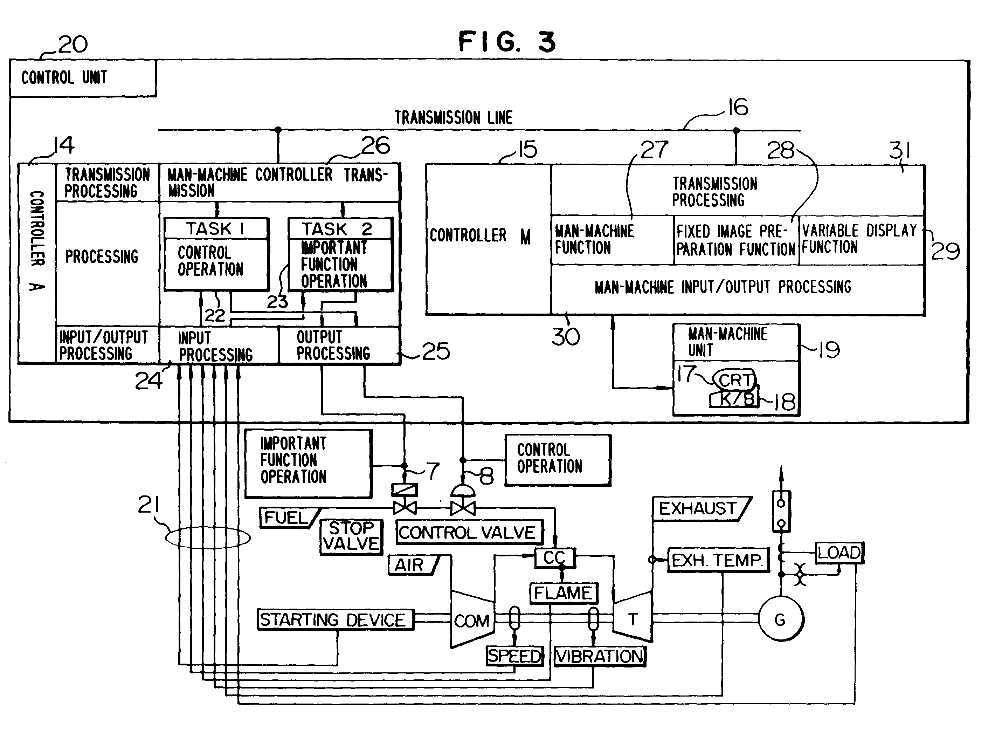

One embodiment of the present invention will be explained below with reference to Fig. 3.

Referring to Fig. 3, a control unit 20 is structured by a controller A-14 as a control processing unit for the gas turbine, a controller M-15 having a display function, a transmission line 16 between the controllers A and M and a man-machine unit 19.

The controller A-14 has a control operating portion (TASK1) 22 and an important function operating portion (TASK2) 23 as processing functions, an input processing portion 24 and an output processing portion 25 as input and output processing functions, and a man-machine controller transmission portion 26 as a transmission processing function. In this case, the task for carrying out the control operation of the control operating portion 22 and the task for carrying out the processing of the important functions of the important function processing portion 23 are structured as mutually independent tasks. The task of the program of the important function operating portion 23 is protected to disable a writing into this task thus fixing the program.

There are various methods for protecting the task. For example, a step for prohibiting making an access for writing in the task is prepared in the program. Alternately, the line to the area for storing the task of the memory is physically (electrically) broken to prohibit writing in this area while permitting only reading this area.

An example of the protection will be explained later with reference to the drawing.

The controller M-15 includes a man-machine function portion 27 for inputting and outputting signals to and from the man-machine unit 19, a fixed drawing preparation function portion 28 for preparing the contents of the operation of the important functions in a format fixed in advance such as a logic diagram, a variable display function portion 29, a man-machine input and output processing portion 30 and a transmission processing portion 31. The man-machine unit 19 has a display unit (CRT) 17 and an operating unit (K/B) 18.

A signal 21 detected by the gas turbine control system is inputted to the controller A-14 through the input processing unit 24 and the signal is processed by the control operating portion 22 or the important function operating portion 23 of the controller A depending on the contents of the signal. In this case, the task for carrying out the control operation and the task for carrying out the operation of the important functions are structured as separate tasks mutually different from each other so that these tasks are mutually separated and the operations of these tasks are carried out mutually independent of each other without any interruption regardless of an output value of the operation of the other task.

The signal processed in the control operating portion 22 is transferred to the fuel flow rate adjusting valve 8 through the output processing portion 25 and is, at the same time, transferred to the controller M-15 from the man-machine controller transmission portion 26 through the transmission line 16. Similarly, the signal processed by the program fixed in the important function operating portion 23 is transferred to the transmitter 31 of the controller M-15 from the man-machine controller transmission portion 26 through the transmission line 16. The controller M-15 transmits the value of each operation of the signal that has been transferred to the transmitter 31 to the man-machine unit 19 through the variable display function potion 29 and also transmits the format of the operation sequence that has been fixed in advance in the fixed drawing preparation function portion 28 to the man-machine unit 19, and makes an image display of these in the display unit 17 (CRT) of the man-machine unit 19.

In this display unit 17 (CRT), the contents of the operation of the important functions that have been arranged in the fixed program can be visualized.

On the other hand, a command by the operating unit (KB) 18 of the man-machine unit 19 is transmitted to the controller A-14 from the man-machine function portion 27 of the controller M-15 through the transmission line 16 and is processed by the control operating portion 22 to control the fuel flow rate control valve 8.

In this case, an abnormal state occurs in the gas turbine control system when the fuel flow rate control valve 8 has been erroneously operated or erroneously stopped due to an abnormal condition of the control operating portion 22 because of an erroneous command sent to the operating unit 18 by a human error or a rewriting of the control operating program from other program. The important function operating portion 23 inputs the signal 21 which has detected the abnormal state through the input processing portion 24 and processes the signal, and when the abnormal state has reached a threshold value the important function processing portion 23 closes the fuel shut off valve 7 through the output processing portion 25 to thereby safely stop the operation of the gas turbine generation facility.

In this case, since the task of the important function operating portion 23 is separated from the task of the control operating portion 22, the important function operating portion 23 can achieve a safe operation.

Although description has been made of the case in the above where an abnormal condition occurs in the gas turbine control system due to an erroneous command sent to the operating unit 23 or an abnormal condition occurred in the control operating portion 22, it is needless to mention that the operation of the important functions can be similarly executed when an abnormal condition has occurred due to a disturbance or the like in the automatic control system structured by the controller A-14 and the gas turbine control system.

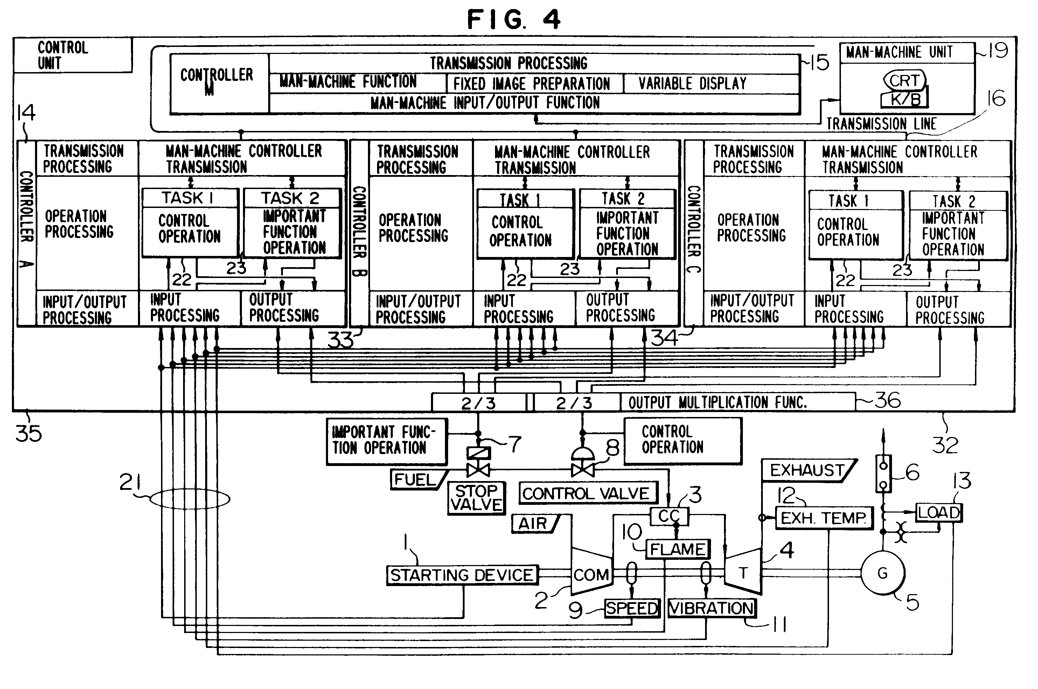

Another embodiment of the present invention will be explained below with reference to Fig. 4.

Referring to Fig. 4, a control unit 32 is structured by a controller A-14 of the control unit 20 in Fig. 3, a controller B-33 and a controller C-34 for carrying out the same control processing as that of the controller A-14, an input multiplex processing portion 35 and an output multiplex processing portion 36. The other configurations are the same as those of Fig. 3.

In the control unit 32, a signal 21 detected by the gas turbine control system is inputted to each of the controllers A, B and C through the input multiplex processing portion 35 and is independently processed by the control operating portion 22 and the important function operating portion 23 of each controller. The result of each processing is transmitted to the controller M-15 from the controllers A, B and C through each transmission line 16 and is thereafter processed in the same manner as that of the embodiment shown in Fig. 3. The result is displayed in the display unit (CRT) of the man-machine unit 19. At the same time, the results of the processing at the control operating portion 22 and the important function operating portion 23 in each of the controllers A, B and C are outputted to the output multiplex processing portion 36. The output multiplex processing portion 36 determines the result of the processing to be outputted based on the majority logic, and controls the fuel flow rate control valve 8 or the fuel shut off valve 7.

According to the present embodiment, the controllers (A, B and C) of the control unit 32 are multiplexed, so that a highly reliable output can be obtained from the control operation or the operation of the important functions.

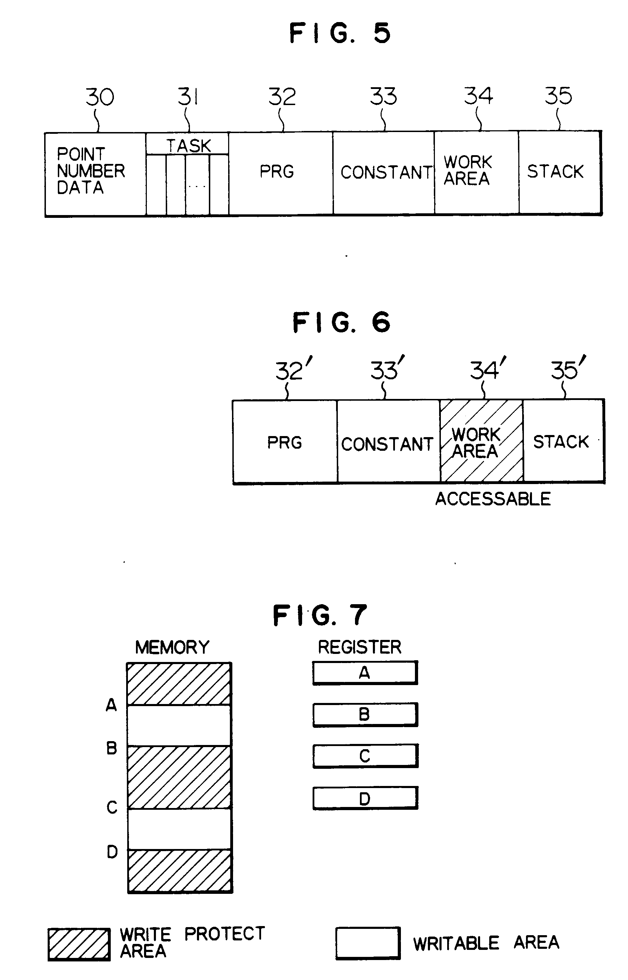

As examples of separated operations between the control operation and the operation of the important functions, Fig. 5 shows a task structure of the control program and Fig. 6 shows a task structure of the important function program.

The task of the control program shown in Fig. 5 is structured by a point number data 30 for showing the input and output points of the program, an area 31 for showing a task number, an area 32 for storing the program, an area 33 for storing the constant of the processing, an area 34 for storing the intermediate process of the processing and a stack area 35. The task of the important function program shown in Fig. 6 is structured by an area 32' for storing the program, an area 33' for storing the constant of the processing, an area 34' for storing the intermediate process of the processing and a stack area 35'.

As shown in the drawings, the control program and the important function program are structured as separate tasks and the important function program task protects itself from data access from the control program task. However, it is made possible to make data access to the control program task from the important function program task. In other words, the control program task and the important function program task have mutually different areas that can be referred to by each task. In the control program task, only the point number data 30 can be read or written and each point number data can be referred to, but the work area 34' and others of the important function program task for storing values of the intermediate process of the operation can not be referred to. However, for the important function program task, in addition to the point number data area 30 of the control program task, the work area 34 and the STAC are 35 can be read. Accordingly, by referring to these two areas, it is possible to know the intermediate process of the operation of the important functions, so that it is possible to visualize the intermediate process of the operation.

Fig. 7 shows an example of the memory protection for protecting the important function program task from being accessed for data from the control program task.

When erroneous data has been written, by a human error or the like, in the area which stores the important function program from the control program that can be changed, there is a risk that the program of the important functions is destroyed to disable the normal operation, resulting in a serious situation that the gas turbine main engine is damaged.

Thus, in order to protect the important function program which is stored in the memory from being written from the outside, ranges of the area A - B and C - D to be protected are written in a register which is separately provided in the memory. With this arrangement, when a writing into the protection area is attempted, a protector provided in the controller works to prevent the writing and produces an alarm of protection error.

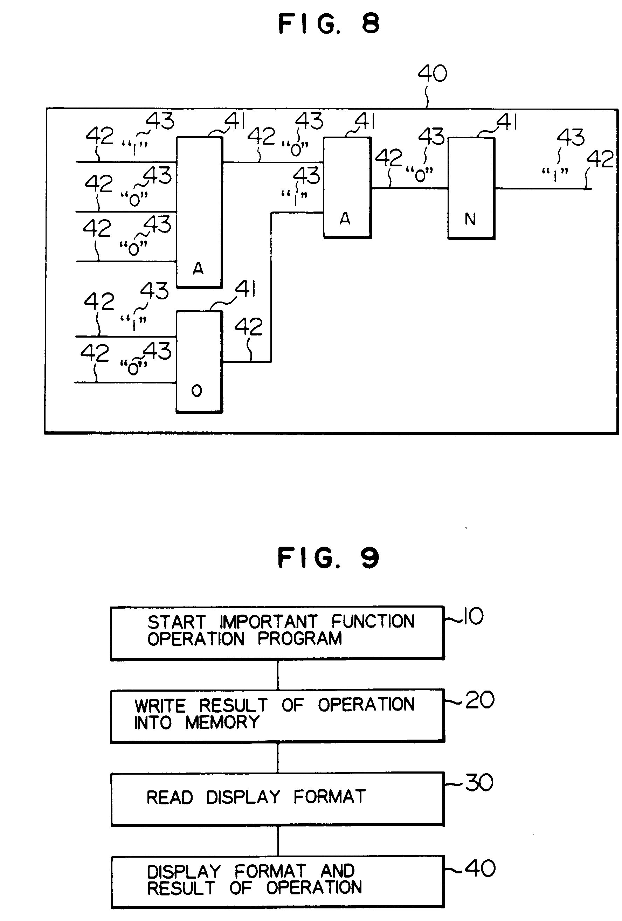

Fig. 8 shows an example of visualizing the contents of the operation of the important functions or an example of the screen showing the intermediate process of the operation. In a screen 40 for showing the intermediate process of the operation, there is a display of operation symbols 41 ("A" refers to an AND circuit, "O" refers to an OR circuit and "N" refers to a NOT circuit), connection lines 42 for connecting between the operation symbols and values 43 ("1" and "0") for showing the intermediate process of the operation of each operation symbol. Since the program of the operation of the important functions has been fixed according to the present invention, the format of the screen 40 is fixed.

Fig. 9 shows the processing procedure for making a display on the screen. When the program of the operation of the important functions has started and the signal of the important functions of the turbine has been inputted, this signal of the important functions is processed by the important function operation program (Processing 10). The result of the operation by this processing is sequentially written into the memory and at the same time past data is erased so that the data is updated (Processing 20). Next, the display format of the screen stored in the memory in advance is read out (Processing 30). The display format and the result of the operation of the important functions are displayed on the screen so that the intermediate process of the operation of the important functions is visualized (Process 40).

According to the present invention, the program of the operation of the important functions may be fixed so that the reliability of the software processing of the important functions can be secured. Further, difficulties in confirming (verifying) the soundness of the program and maintaining the program due to the fixed program can be solved by reading out the intermediate process of the operation. Further, important functions which have so far been achieved by hardware can be achieved by software according to the present invention, so that the hardware that has been conventionally used can be omitted. As a result, the system can be simplified substantially.

Further, by multiplexing the control processing portion, high reliability of the software can be obtained.

Further, by pseudo displaying the contents of the fixed program by the display system, only the intermediate process of the operation of the important functions is handled as variables, so that the maintenance of the program is facilitated further.

## Claims

1. A control device (20) for controlling a gas turbine system (4) according to a computer program, having:
means (9, 10, 11, 12, 13) for measuring operation parameters of devices structuring said gas turbine system;
control task storing means (22) for performing an operation of a control level relating to the revolution of said gas turbine system based on values of said measured operation parameters;
protection task storing means (23) for storing a protection task which performs an operation of control levels relating to protection functions of devices structuring said gas turbine system, based on said values of said measured operation parameters;
operation processing means for executing both said control task and said protection task; and
means for generating a control signal for controlling the operation of said gas turbine system according to a result of the execution of said operation processing means;
and characterized in that:
said protection task is not able to be rewritten from the outside and includes an accessible work area (34, 34')for temporarily storing an intermediate process of said control levels relating to said protection function; and
the control device further comprises;
display means (17) for displaying an operation procedure of said control levels relating to said protection functions in an image made of a combination of fixed symbols; and
means for reading said intermediate process of the operation from said work area of said protection task and adding said intermediate process of the operation to the image of said operation process of said image display means.

2. A control device according to Claim 1, further including a plurality of said operation processing means and a multiplex processing means (36) for selectively outputting, based on a majority logic, any one of a plurality of said control signals which are outputted from said plurality of operation processing means.

3. A control device according to Claim 1, wherein said control signal includes a signal for controlling a fuel flow rate of said gas turbine system and a signal for shutting off a fuel line.

4. A method for controlling an operation of a gas turbine system according to a computer program, comprising the steps of:
measuring operation parameters of devices structuring said gas turbine system;
effecting within said computer program a control task for carrying out an operation of control levels relating to the operation of said gas turbine, by using values of said operation parameters that have been measured;
effecting within said computer program a protection task for carrying out an operation of control levels relating to protection functions of devices structuring said gas turbine system by using values of said operation parameters that have been measured;
generating a control signal for controlling the operation of said gas turbine system according to a result of the execution of both said tasks;
and characterized in that:
said step of effecting of the protection task is independent of said control task;
and the method further comprises the steps of;
making an image display of an operation procedure of control levels relating to said protection function by a combination of fixed symbols; and
displaying an intermediate process of an operation of said protection task on said image of the operation procedure that is being displayed.

5. A method for controlling an operation of a gas turbine system according to claim 4, wherein said protection task is a write protected program, said method further including the step for temporarily storing said intermediate process of an operation of said protection task.

6. A method for controlling an operation of a gas turbine system according to claim 5, wherein said control signal includes both a signal for controlling a fuel flow rate of said gas turbine system and a signal for shutting off a fuel line.

## Patentansprüche

1. Steuervorrichtung (20) zur Steuerung eines Gasturbinensystems (4) nach einem Computerprogramm, aufweisend:
eine Einrichtung (9, 10, 11, 12, 13) zum Messen von Betriebsparametern von Einrichtungen, aus denen das Gasturbinensystem aufgebaut ist,
eine Steuertask-Speichereinrichtung (22), um aufgrund von Werten der gemessenen Betriebsparametern einen Betrieb auf einer die Drehung des Gasturbinensystems betreffenden Steuerebene durchzuführen,
eine Schutztask-Speichereinrichtung (23) zum Speichern eines Schutztasks, der aufgrund der Werte der gemessenen Betriebsparameter einen Betrieb auf Steuerebenen durchführt, die Schutz funktionen von Einrichtungen betreffen, aus denen das Gasturbinensystem aufgebaut ist,
eine Betriebs-Verarbeitungseinrichtung zur Ausführung des Steuertasks und des Schutztasks, und
eine Einrichtung zur Erzeugung eines Steuersignals zur Steuerung des Betriebs des Gasturbinensystems entsprechend dem Ausführungsergebnis der Betriebs-Verarbeitungseinrichtung,
dadurch gekennzeichnet, daß
der Schutztask von außen nicht überschreibbar ist und einen zugreifbaren Arbeitsbereich (34, 34') zum vorübergehenden Speichern eines Zwischenprozesses der die Schutzfunktion betreffenden Steuerebenen, und
daß die Steuervorrichtung folgendes umfaßt:
eine Anzeigeeinrichtung (17), um in einem aus einer Kombination fester Symbole bestehenden Bild einen Betriebsablauf der die Schutz funktionen betreffenden Steuerebenen anzuzeigen, und
eine Einrichtung, um den Zwischenprozess des Betriebs aus dem Arbeitsbereich des Schutztasks zu lesen und dem Bild des Betriebsablaufs auf der Bildanzeigeeinrichtung hinzuzufügen.

2. Steuervorrichtung nach Anspruch 1, mit einer Vielzahl der genannten Betriebs-Verarbeitungseinrichtungen und mit einer Multiplex-Verarbeitungseinrichtung (36), um auf der Grundlage einer Majoritätslogik wahlweise eine einer Vielzahl an Steuersignalen, die von den Betriebs-Verarbeitungseinrichtungen erzeugt werden, auszugeben.

3. Steuervorrichtung nach Anspruch 1, wobei das Steuersignal ein Signal zur Steuerung einer Kraftstoff-Flußrate des Gasturbinensystems und ein Signal zur Abschaltung einer Kraftstoffleitung beinhaltet.

4. Verfahren zur Steuerung des Betriebs eines Gasturbinensystems nach einem Computerprogramm, mit folgenden Schritten:
Messen von Betriebsparametern von Einrichtungen, aus denen das Gasturbinensystem aufgebaut ist,
Ausführen eines Steuertasks innerhalb des Computerprogramms, um einen Betrieb auf Steuerebenen durchzuführen, die den Betrieb der Gasturbine betreffen, indem Werte der gemessenen Betriebsparameter verwendet werden,
Ausführen eines Schutztasks innerhalb des Computerprogramms, um einen Betrieb auf Steuerebenen auszuführen, die Schutz funktionen von Einrichtungen betreffen, aus denen das Gasturbinensystem aufgebaut ist, indem Werte der gemessenen Betriebsparameter verwendet werden,
Erzeugen eines Steuersignals zur Steuerung des Betriebs des Gasturbinensystems entsprechend dem Ausführungsergebnis beider Tasks,
dadurch gekennzeichnet, daß
der Schritt des Ausführens des Schutztasks unabhängig von dem Steuertask ist,
und daß das Verfahren außerdem die folgenden Schritte aufweist:
Anlegen einer Bildanzeige eines Betriebsablaufs auf Steuerebenen, die die Schutzfunktion betreffen, indem feste Symbole kombiniert werden, und
Anzeigen eines Zwischenprozesses eines Betriebs des Schutztasks auf dem angezeigten Bild des Betriebsablaufs.

5. Steuerverfahren nach Anspruch 4, wobei der Schutztask ein schreibgeschütztes Programm darstellt und das Verfahren einen Schritt zum vorübergehenden Speichern des Zwischenprozesses eines Betriebs des Schutztasks beinhaltet.

6. Verfahren nach Anspruch 5, wobei das Steuersignal sowohl ein Signal zur Steuerung einer Kraftstoff-Flußrate des Gasturbinensystems als auch ein Signal zur Abschaltung einer Kraftstoffleitung umfaßt.

## Revendications

1. Dispositif de commande (20) pour commander un système de turbine à gaz (4) conformément à un programme informatique, comprenant :
des moyens (9,10,11,12,13) pour mesurer des paramètres de fonctionnement de dispositifs constituant ledit système de turbine à gaz;
des moyens (22) de mémorisation de tâche de commande pour exécuter une opération d'un niveau de commande associé à la rotation dudit système de turbine à gaz sur la base de valeurs desdits paramètres de fonctionnement mesurés;
des moyens (23) de mémorisation de tâche de protection, pour mémoriser une tâche de protection qui exécute une opération de niveaux de commande associés à des fonctions de protection de dispositifs constituant ledit système de turbine à gaz, sur la base desdites valeurs desdits paramètres de fonctionnement mesurés;
des moyens de traitement d'opérations pour exécuter à la fois ladite tâche de commande et ladite tâche de protection; et
des moyens pour produire un signal de commande pour commander le fonctionnement dudit système de turbine à gaz en fonction d'un résultat de l'exécution desdits moyens de traitement d'opérations; et
caractérisé en ce que
ladite tâche de protection n'est pas apte à être réenregistrée à partir de l'extérieur et inclut une zone de traitement accessible (34,34') pour la mémorisation temporaire d'un processus intermédiaire desdits niveaux de commande associés à ladite fonction de protection; et
le dispositif de commande comporte en outre :
des moyens d'affichage (17) pour afficher une procédure d'opération desdits niveaux de commande associés auxdites fonctions de protection dans une image formée d'une combinaison de symboles fixes; et
des moyens pour lire ledit processus intermédiaire d'opération à partir de ladite zone de travail de ladite tâche de protection et ajouter ledit processus intermédiaire d'opération à l'image dudit processus d'opération desdits moyens d'affichage d'images.

2. Dispositif de commande suivant la revendication 1, comprenant en outre une pluralité desdits moyens de traitement d'opérations et des moyens de traitement multiplex (36) pour délivrer de façon sélective, sur la base d'une logique majoritaire, l'un quelconque d'une pluralité desdits signaux de commande, qui sont délivrés par ladite pluralité de moyens de traitement d'opérations.

3. Dispositif de commande suivant la revendication 1, dans lequel ledit signal de commande inclut un signal pour commander un débit de combustible dudit système de turbine à gaz et un signal pour couper une canalisation de combustible.

4. Procédé pour commander un fonctionnement d'un système de turbine à gaz conformément à un programme informatique, comprenant les étapes consistant à :
mesurer des paramètres de fonctionnement de dispositifs constituant ledit système de turbine à gaz;
exécuter, dans le cas dudit programme informatique, une tâche de commande pour exécuter une opération de niveaux de commande associés au fonctionnement de ladite turbine à gaz, en utilisant des valeurs desdits paramètres de fonctionnement qui ont été mesurés;
exécuter, dans le cas dudit programme informatique, une tâche de production pour exécuter une opération de niveaux de commande associés à des fonctions de protection de dispositifs constituant ledit système
de turbine à gaz en utilisant des valeurs desdits paramètres de fonctionnement qui ont été mesurés;
produire un signal de commande pour commander le fonctionnement dudit système de turbine à gaz en fonction du résultat de l'exécution desdites deux tâches; et
caractérisé en ce que :
ladite étape consistant à exécuter la tâche de protection est indépendante de ladite tâche de commande; et
le procédé comprend en outre les étapes consistant à :
réaliser l'affichage d'une image d'une procédure d'opération de niveaux de commande associés à ladite fonction de protection, au moyen d'une combinaison de symboles fixes; et
afficher un processus intermédiaire d'une opération de ladite tâche de protection sur ladite image de la procédure d'opération qui est affichée.

5. Procédé pour commander un fonctionnement d'un système de turbine à gaz selon la revendication 4, dans lequel ladite tâche de protection est un programme protégé en écriture, ledit procédé comprenant en outre l'étape consistant à mémoriser temporairement ledit processus intermédiaire d'une opération de ladite tâche de protection.

6. Procédé pour commander un fonctionnement d'un système de turbine à gaz selon la revendication 5, dans lequel ledit signal de commande inclut à la fois un signal pour commander un débit de combustible dudit système de turbine à gaz et un signal pour couper une canalisation de combustible.
